# EUROPEAN PATENT SPECIFICATION

(11) **EP 3 431 864 B1**
(45) Date of publication and mention of the grant of the patent: **11.01.2023**
(21) Application number: 17182445.1
(22) Date of filing: 20.07.2017
(51) Int. Cl.: F21S 41/148, F21S 41/20, F21S 41/30, F21S 41/50, F21S 41/675, F21S 41/63, B60Q 1/00, B60Q 1/04

(54) **LIGHTING DEVICE FOR VEHICLES PROVIDED WITH ROTATING LIGHTING MODULES**
BELEUCHTUNGSVORRICHTUNG FÜR FAHRZEUGE MIT DREHENDEN BELEUCHTUNGSMODULEN
DISPOSITIF D'ÉCLAIRAGE POUR VÉHICULES POURVUS DE MODULES D'ÉCLAIRAGE ROTATIFS

(43) Date of publication of application: 23.01.2019
(73) Proprietor: Marelli Automotive Lighting Italy S.p.A., 10078 Venaria Reale (TO) (IT); PSA Automobiles SA, 78300 Poissy (FR)
(72) Inventor: BORE, Michael, 78300 POISSY (FR); LE DALL, Christophe, 78300 POISSY (FR); GONCALVES, Whilk Marcelino, 78300 POISSY (FR); ZATTONI, Sergio, 10078 VENARIA REALE (IT); PELLEGRINI, Daniele, 10078 VENARIA REALE (IT); VAGLIERA, Cristiano, 10078 VENARIA REALE (IT)
(74) Representative: Plebani, Rinaldo

(56) References cited:
- EP-A1- 0 779 475
- EP-A1- 2 754 950
- EP-A1- 3 176 493
- EP-A2- 0 971 167
- DE-A1- 3 415 442
- DE-A1- 4 434 667
- DE-A1- 19 519 654
- FR-A1- 2 611 859
- FR-A1- 2 695 189
- US-A1- 2008 247 182

## Description

### Technical field of the invention

The present invention relates to a lighting device equipped with one or more lighting modules using LEDs as a light source and having rotation capabilities in order to provide selectively more than one optical functions, like e.g. signaling functions as position light, direction light, welcome light, DRL (Daytime Running Light), and/or lighting functions like a forward low beam (cross beam) or fog beam.

### Technical Background

Lighting devices for vehicles provided with rotating LED lighting modules are known in the art.

For example, EP2902701 discloses a device wherein a lighting module comprises a first LED light source and at least one reflector and wherein the reflector is operatively associated with the first light source and is motorized in order to rotate around an axis in relation to the first light source; moreover, the module comprises also light guides operatively associated with a second LED light source; to rotate the reflector, the lighting module is equipped with a fixed motor and to operate the motor and the LED light sources the module is also provided with suitable electronics, normally borne by a printed circuit board. In order to equip a lighting device for a vehicle, in particular a headlamp, more than one, e.g. two, three or four, rotating lighting modules, e.g. of the type described in EP2902701, are to be arranged side by side in a cup-shaped housing body of the lighting device, facing a front inlet opening of the housing body closed in use by a transparent cover or lens. Such a lighting device is e.g. also known from document US 2008/247182 A1.

Since the transparent cover or lens is nowadays always connected to the housing body by a continuous adhesive thread which is usually extruded directly onto a peripheral rim of the inlet opening of the housing body and since the known rotating lighting modules are usually quite bulky, it is a drawback of the lighting devices known in the art that the adhesive may reach the rotation axis of the reflector and/or the electronic components of one or more rotating lighting modules, either during the extrusion step or, more likely, when the transparent cover or lens is mounted to close the inlet opening by pressing a peripheral rim of the transparent cover or lens against the peripheral rim of the housing body provided with the extruded adhesive thread.

Of course, if the adhesive reaches the rotation axis it may impair the performances of the rotating lighting module, when not even blocking it, and if the adhesive reaches the electronic components the performances of the lighting module may be impaired as well.

### Summary of the invention

The object of the present invention is to provide a lighting device for vehicles having one or more rotating lighting modules e.g. using LEDs as the light source that is compact, simple and cost-effective in construction, while avoiding at the same time that the adhesive used to connect the front transparent cover or lens to the housing body reaches the rotating parts and/or the electronic components of the rotating lighting modules.

According to the invention, therefore, a lighting device for vehicles including one or more rotating lighting modules is provided having the features set out in the appended claims.

### Brief description of the drawings

Further features and advantages of the present invention will become more apparent from the following description of one non-limiting embodiment thereof, made with reference to the figures in the accompanying drawings, in which:
- figure 1 shows schematically a sectioned side elevation view of a lighting device according to the invention;
- figure 2 shows in an enlarged scale, a three quarter front perspective view of part of the lighting device of figure 1 with parts removed for sake of clarity;
- figure 3 shows schematically and in perspective view a detail of figure 2; and
- figure 4 shows schematically and in an enlarged scale a further detail of figures 2 and 3.

### Detailed description

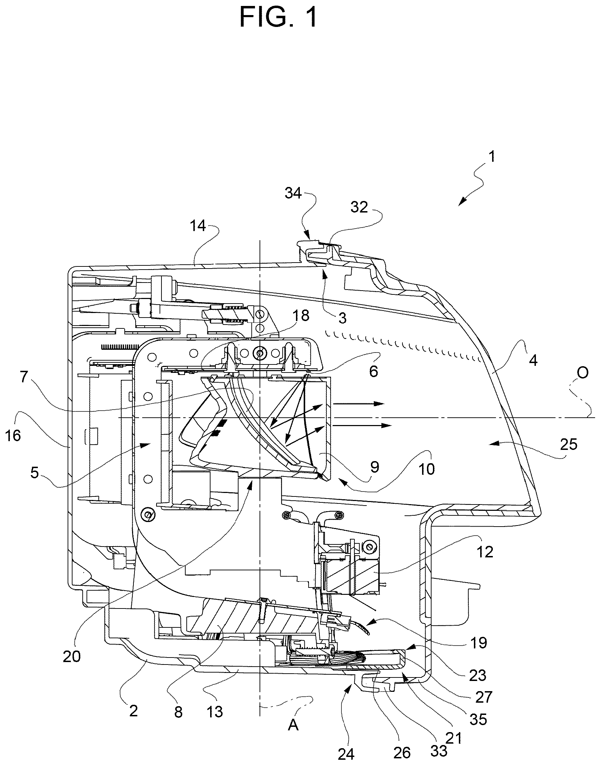

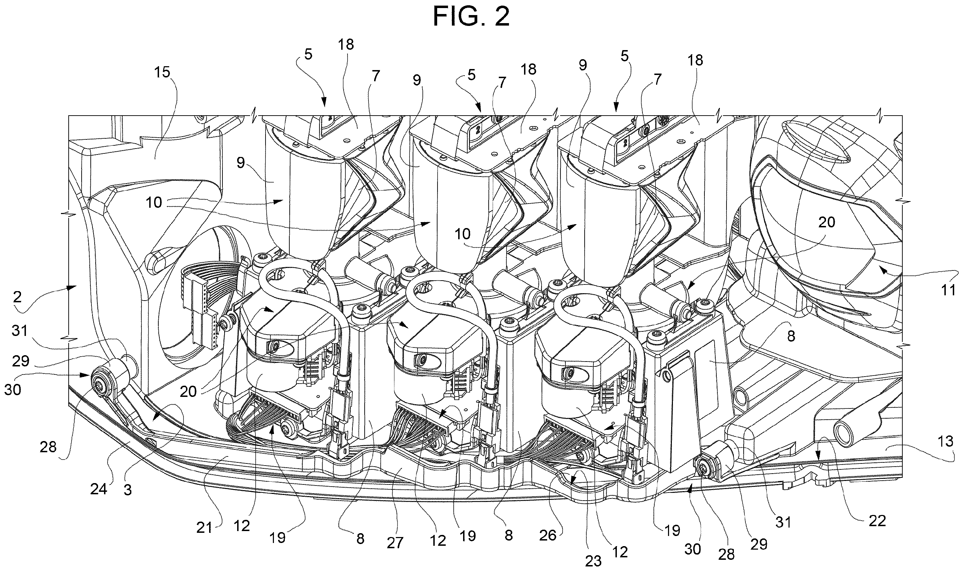

With reference to figures 1 and 2, reference numeral 1 indicates as a whole a lighting device consisting, in the non-limiting embodiment shown, in a vehicle headlight, which is only schematically shown. It is however to be intended that what will be described can be applied to any vehicle lighting device.

The lighting device 1 comprises a generally cup-shaped housing body 2 designed to be mounted on a vehicle, known and not shown for sake of simplicity.

The housing body 2 is made of synthetic plastic material by injection molding and has a front inlet opening 3 in use facing opposite to the vehicle and along a driving direction of the vehicle, closed by a transparent cover or lens 4 (figure 1).

The housing body 2 carries at the interior thereof at least one rotating lighting module 5 shown more in details in figure 1. Of course, housing body 2 may carry within it more than one lighting module 5 (e.g. two or three, arranged side by side as it is the case of the embodiment shown) that may be visible from the outside through the inlet opening 3 and the transparent cover or lens 4. In the non-limiting embodiment shown, the housing body 2 is also provided at the interior thereof with at least one stationary lighting module 11 (figure 2) known and not described in details for sake of simplicity.

All the lighting modules 5 are arranged facing the front transparent cover/lens 4 closing the inlet opening 3 of the cup-shaped housing body 2.

One lighting module 5 is shown in a longitudinal sectioned elevation view in figure 1.

Each lighting module 5 is of the rotating type and is designed to specifically equip a lighting device for vehicles, like lighting device 1.

Each rotating lighting module 5 comprises at least one first light source 6 (figure 1), preferably consisting of a LED, at least one first reflector 7 and a lens 9 (neutral or optically active) placed in front of the first reflector 7 and assembled angularly rigid therewith to form a movable optical unit 10 borne by a support 8 arranged within the housing body 2.

The movable optical unit 10 is rotating in relation to the at least one light source 6 around at least a first axis A (figure 1) and is operatively associated to the at least one light source 6.

To rotate the optical unit 10 around axis A, each lighting module 5 comprises an actuator 12 consisting of an electric motor, in the embodiment shown arranged eccentrically in relation to axis A and carried, directly or indirectly, by the same support 8 bearing in idling manner the movable optical unit 10.

The lighting device 1 may comprise a support 8 for each rotating lighting module 5 or a single support 8 carrying all the rotating lighting modules 5. In both cases the support 8 is preferably realized as a self-supporting element, separated from the housing body 2 and is fixed rigid within the housing body 2, against a bottom wall 13 thereof defining the "floor" of the interior of the housing body 2.

In particular, and with reference to figure 1, the cup-shaped housing body 2 is delimited by the bottom wall 13, by an upper wall 14, by one or more lateral walls 15 (figures 2-4) and by a rear wall 16 facing the inlet opening 3 and arranged at an angle with the bottom wall 13.

The at least one light source 6 is carried by a printed circuit board 18 (figure 2) arranged above the movable optical unit 10, while the electric motor 12 is arranged below the movable optical unit 10.

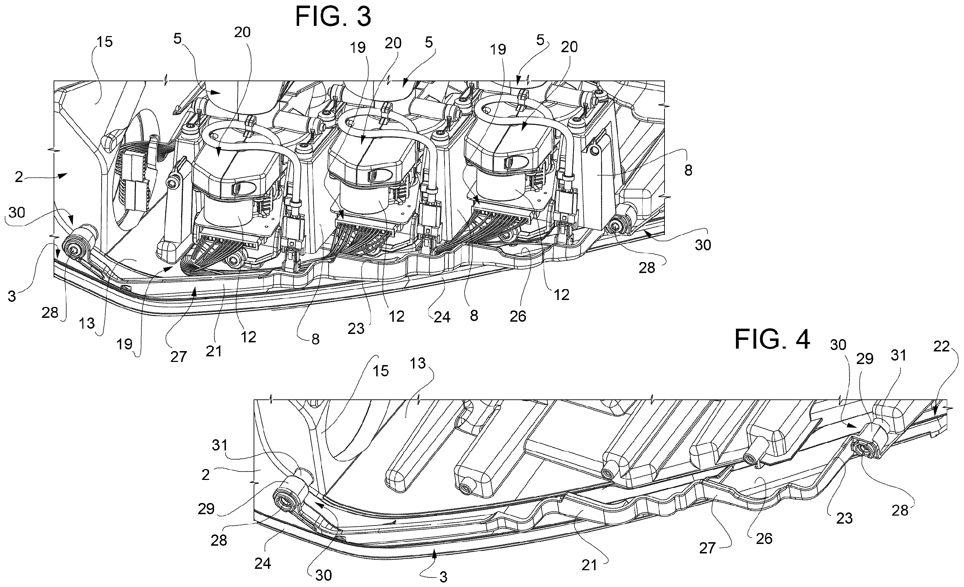

Each rotating lighting module 5 is also provided with suitable electronic components and/or cables, overall indicated with reference number 19, known and not described in details for sake of simplicity, to control and feed the rotating lighting module 5, e.g. the motor 12 and the light source 6. Such components/cables 19 are arranged immediately beneath a bottom section 20 (figure 3) of each movable optical unit 10, in the example shown at the bottom wall 13 or immediately above it, but anyway closer to the bottom wall 13 than to the bottom section 20, e.g. they are arranged immediately below the electric motor 12 and at the support 8.

According to the present invention, a protective shield 21 is arranged at the bottom wall 13 of the housing body 2 and between the housing body 2 and the transparent cover or lens 4.

The protective shield 21 is designed so as to run along at least part of a bottom profile 22 of the inlet opening 3, and faces the al least one rotating lighting module 5, namely all the rotating lighting modules 5 present in the lighting device 1.

Moreover, the protective shield 21 has a first rim 23 projecting upwards in front of the transparent cover or lens 4; in particular, the rim 23 projects between the transparent cover or lens 4 and at least part of the (each) support 8 and/or of the bottom section 20 of the movable optical unit 10 of each rotating lighting module 5.

In this manner, the protective shield 21 faces all the rotating lighting modules 5 and is interposed between the transparent cover or lens 4 and the movable optical unit 10 of each rotating lighting module 5.

According to a further aspect of the invention, the protective shield 21 extends frontally in cantilever fashion from the inlet opening 3 projecting frontally, i.e. on the side opposite to the rear wall 16, at least in part beyond a bottom rim 24 of the inlet opening 3 and in front the inlet opening 3, transversally the bottom rim 24 thereof and within an inner concavity 25 (figure 1) delimited by the transparent cover or lens 4, which is also cup-shaped.

As it is known, each rotating lighting module 5 possesses an optical axis 0 (figure 1), which is oriented along the direction of propagation of the light rays emitted by the LED light source 6, light rays represented by the arrows in figure 1, deviated by reflector 7 through the lens 9.

As it is well shown in figure 1, the protective shield 21 has in a transversal cross-section, taken along the optical axis 0 of the at least one rotating lighting module 5, a substantially L-shape defined (figures 1 and 4) by a bottom wall 26 and by a front wall 27 of the protective shield 21.

The front wall 27 defines the first rim 23 projecting upwards of the protective shield 21.

The protective shield 21 is realized according to one aspect of the invention as a self-supporting element independent of the housing body 2 and arranged at least in part within the housing body 2 such as to rest at least in part against and upon the bottom wall 13 of the housing body .

The protective shield 21 is however frontally assembled rigid with the housing body 2 by means of removable connection elements 28, e.g. screws; screws 28 are inserted in through manner inside respective first seats 29 provided (figures 2 and 4) at opposite longitudinal ends 30 of the protective shield 21 and couple within second seats 31 provided frontally in the housing body 2, facing the inlet opening 3 thereof.

The protective shield 21 is configured so that the first rim 23 projecting upwards thereof faces the electronic components and/or cables 19 and is interposed between them and the transparent cover or lens 4.

The transparent cover or lens 4 (figure 1) has a peripheral rim 32 facing the housing body 2 and coupling within a channel-shaped seat 33 provided along a front peripheral rim 34 of the housing body 2 delimiting the inlet opening 3 as well as the bottom rim 24 thereof.

According to one aspect of the invention, the protective shield 21 is interposed between the peripheral rim 32 of the transparent cover or lens 4 and the at least one rotating lighting module 5 or the plurality of rotating lighting modules 5, as in the embodiment shown.

The protective shield 21 is moreover arranged interposed between each at least one rotating lighting module 5 and both the peripheral rim 32 of the transparent cover or lens 4 and the front peripheral rim 34 of the housing body 2.

Finally, the protective shield 21 is configured such as it extends at least in part above a bottom portion 35 of the peripheral rim 32 of the transparent cover or lens 4 and axially along the optical axis 0 of each at least one rotating lighting module 5, beyond the front peripheral rim 34 of the housing body 2 provided with the channel-shaped seat 33 or at least beyond a part thereof, e.g. beyond the bottom rim 24 of the inlet opening 3.

The channel-shaped seat 33 is designed to receive an extruded adhesive seal (known and not shown for sake of simplicity) connecting rigid and in a fluid tight manner, in use, the housing body 2 and the transparent cover or lens 4.

Owing to the described structure and configuration of elements, the lighting modules 5, the support (s) 8 thereof and all the accessories like the electronic components and cables 19 can be mounted within the housing body 2 through the inlet opening 3, when the transparent cover or lens 4 is not yet in place.

Then it is mounted the protective shield 21, which is arranged so that it shields/intercepts the bottom part of the inlet opening 3, at the bottom rim 24 thereof.

Finally, a known adhesive sealing thread (not shown) is extruded within the channel-shaped seat 33 and, thereafter, the transparent cover or leans 4 is coupled with the housing body 2 by pressing the peripheral rim 32 within the seat 33 and against the peripheral rim 34.

During the two latter operations, the protective shield 21 remains always interposed between the interior of the housing body 2 and the adhesive sealing thread at the part thereof facing the bottom sections 20 of the movable optical units 10 of the lighting modules 5, so as to avoid any risk that part of the adhesive sealing thread may reach, both during the extrusion phase and the assembly phase of the cover or lens 4 onto the housing body 2, the lighting modules 5 and above all the moving parts 10 thereof and/or the electronics/cables 19.

All the aims of the invention are therefore accomplished.

## Claims

1. A lighting device (1) for vehicles, such as a headlight or a headlamp, comprising a cup-shaped housing body (2) designed to be mounted on a vehicle body and at least one rotating lighting module (5) arranged within the housing body facing a front inlet opening (3) thereof closed by a transparent cover or lens (4); each rotating lighting module (5) comprising at least one light source (6) and a movable optical unit (10) borne by a support (8) arranged within the housing body (2), the movable optical unit (10) being rotating in relation to the at least one light source (6) around at least a first axis (A) and being operatively associated to the at least one light source (6); the transparent cover or lens (4) having a peripheral rim (32) facing the housing body and coupling within a channel-shaped seat (33) provided along a front peripheral rim (34) of the housing body delimiting said inlet opening (3) thereof, an adhesive sealing thread being applied within said channel-shaped seat (33); said device being **characterized in that it further comprises** a protective shield (21) arranged solely at a bottom wall (13) of the housing body (2) and between the housing body (2) and the transparent cover or lens (4), the protective shield (21) being designed so as to run along at least part of a bottom profile (22) of the inlet opening (3) facing the at least one rotating lighting module (5);
said protective shield (21) having a first rim (23) projecting upwards in front of the transparent cover or lens (4) and arranged between the transparent cover or lens (4) and at least part of said support (8) and/or of a bottom section (20) of the movable optical unit (10);
i)- the protective shield (21) extending in cantilever fashion from the inlet opening (3), projecting forward thereof, at least in part beyond a bottom rim (24) of the inlet opening (3), transversally said bottom rim (24) thereof and within an inner concavity (25) of the transparent cover or lens (4), which is cup-shaped;
ii)- the protective shield (21) having in a transversal cross-section, taken along an optical axis (0) of the at least one rotating lighting module (5), a substantially L-shape defined by a bottom wall (26) and by a front wall (27) thereof, the front wall (27) defining said first rim (23) projecting upwards of the protective shield (21), said first rim (23) projecting upwards being configured such that
iii)- said protective shield (21) is always interposed between
iv)- said at least part of said support (8) and/or of a bottom section (20) of the movable optical unit (10) of said at least one rotating lighting module (5); and
v)- both a bottom portion (35) of the peripheral rim (32) of the transparent cover or lens and said bottom rim (24) of the inlet opening (3) of said body, axially beyond both of them along the optical axis (0) of each at least one rotating lighting module (5),
vi)- such as said protective shield (21) is arranged always interposed between the interior of the housing body (2) and the adhesive sealing thread applied within said channel-shaped seat (33), at least at a part thereof facing the bottom sections (20) of the movable optical unit (10) of the at least one lighting module (5), so avoiding any risk that part of the adhesive sealing thread may reach, the at least one lighting module (5).

2. A lighting device (1) according to claim 1, **characterized in that** it comprises a plurality of rotating lighting modules (5), the protective shield (21) facing all the rotating lighting modules and being interposed between the transparent cover or lens (4) and the movable optical unit (10) of each rotating lighting module (5).

3. A lighting device (1) according to anyone of the preceding claims, **characterized in that** said protective shield (21) is a self-supporting element independent of the housing body (2) and arranged at least in part within the housing body such as to rest at least in part against and upon said bottom wall (13) of the housing body and frontally assembled rigid with the housing body (2) by means of removable connection elements (28) inserted in through manner inside respective first seats (29) provided at opposite longitudinal ends (30) of the protective shield and coupling within second seats (31) provided frontally in the housing body (2), facing the inlet opening thereof.

4. A lighting device (1) according to anyone of the preceding claims, **characterized in that** said at least one rotating lighting module (5) is provided at said support with electronic components and/or cables (19) to control and feed said rotating lighting module; said first rim (23) projecting upwards of the protective shield faces said electronic components and/or cables (19) and is interposed between them and the transparent cover or lens (4).

5. A lighting device (1) according to anyone of the preceding claims, **characterized in that** said protective shield (21) extends at least in part above a bottom portion (35) of the peripheral rim (32) of the transparent cover or lens (4) and axially along an optical axis (0) of the at least one rotating lighting module (5) beyond a front peripheral rim (34) of the housing body (2) provided with said channel-shaped seat (33) designed to receive an extruded adhesive seal connecting rigid the housing body (2) and the transparent cover or lens (4).

6. Vehicle provided with a lighting device (1) according to anyone of the preceding claims.

## Patentansprüche

1. Leuchtvorrichtung (1) für Fahrzeuge, wie beispielsweise ein Frontscheinwerfer oder ein Vorderlicht, umfassend einen schalenförmigen Gehäusekörper (2), der für eine Montage an einer Fahrzeugkarosserie ausgebildet ist, und wenigstens ein drehbares Leuchtmodul (5), das innerhalb des Gehäusekörpers angeordnet ist und einer vorderen Einlassöffnung (3) desselben zugewandt ist, die durch eine transparente Abdeckung oder Linse (4) verschlossen ist; wobei jedes drehbare Leuchtmodul (5) wenigstens eine Lichtquelle (6) und eine bewegliche optische Einheit (10) umfasst, die von einer im Gehäusekörper (2) angeordneten Halterung (8) getragen wird, wobei sich die bewegliche optische Einheit (10) in Bezug auf die wenigstens eine Lichtquelle (6) um wenigstens eine erste Achse (A) dreht und mit der wenigstens einen Lichtquelle (6) funktional verbunden ist; wobei die transparente Abdeckung oder Linse (4) einen Umfangsrand (32) aufweist, der dem Gehäusekörper zugewandt ist und in einen kanalförmigen Sitz (33) eingreift, der entlang eines vorderen Umfangsrandes (34) des Gehäusekörpers vorgesehen ist und dessen Einlassöffnung (3) begrenzt, wobei ein klebender Dichtungsfaden in dem kanalförmigen Sitz (33) angebracht ist; wobei die Vorrichtung **dadurch gekennzeichnet ist, dass** sie ferner einen Schutzschild (21) umfasst, der nur an einer Bodenwand (13) des Gehäusekörpers (2) und zwischen dem Gehäusekörper (2) und der transparenten Abdeckung oder Linse (4) angeordnet ist, wobei der Schutzschild (21) so ausgebildet ist, dass er wenigstens entlang eines Teils eines Bodenprofils (22) der Einlassöffnung (3) verläuft, das dem wenigstens einen drehbaren Leuchtmodul (5) zugewandt ist; wobei der Schutzschild (21) einen ersten Rand (23) aufweist, der vor der transparenten Abdeckung oder Linse (4) nach oben ragt und zwischen der transparenten Abdeckung oder Linse (4) und wenigstens einem Teil der Halterung (8) und/oder eines Bodenabschnitts (20) der beweglichen optischen Einheit (10) angeordnet ist;
i)- wobei der Schutzschild (21) sich freitragend von der Einlassöffnung (3) aus erstreckt, davon wenigstens teilweise über einen unteren Rand (24) der Einlassöffnung (3) hinaus nach vorne ragt, quer zu dessen unterem Rand (24) und innerhalb einer inneren Aushöhlung (25) der transparenten Abdeckung oder Linse (4), die schalenförmig ist;
ii)- wobei der Schutzschild (21) in einem Querschnitt entlang einer optischen Achse (O) des wenigstens einen drehbaren Leuchtmoduls (5) eine im Wesentlichen L-förmige Gestalt aufweist, die durch eine Bodenwand (26) und eine Vorderwand (27) desselben definiert ist, wobei die Vorderwand (27) den ersten Rand (23) definiert, der vom Schutzschild (21) nach oben ragt, wobei der nach oben ragende erste Rand (23) so konfiguriert ist, dass
iii)- der Schutzschild (21) immer angeordnet ist zwischen
iv)- dem wenigstens einen Teil der Halterung (8) und/oder eines Bodenabschnitts (20) der beweglichen optischen Einheit (10) des wenigstens einen drehbaren Leuchtmoduls (5); und
v)- sowohl einem Bodenabschnitt (35) des Umfangsrandes (32) der transparenten Abdeckung oder Linse als auch dem unteren Rand (24) der Einlassöffnung (3) des Körpers, axial über beide hinaus entlang der optischen Achse (O) jedes wenigstens einen drehbaren Leuchtmoduls (5),
vi)- wobei der Schutzschild (21) immer zwischen dem Inneren des Gehäusekörpers (2) und dem klebenden Dichtungsfaden, der in dem kanalförmigen Sitz (33) angebracht ist, angeordnet ist, wobei wenigstens ein Teil davon den Bodenabschnitten (20) der beweglichen optischen Einheit (10) des wenigstens einen Leuchtmoduls (5) zugewandt ist, so dass jedes Risiko vermieden wird, dass ein Teil des klebenden Dichtungsfadens das wenigstens eine Leuchtmodul (5) erreichen kann.

2. Leuchtvorrichtung (1) nach Anspruch 1, **dadurch gekennzeichnet, dass** sie mehrere drehbare Leuchtmodule (5) umfasst, wobei der Schutzschild (21) allen drehbaren Leuchtmodulen zugewandt ist und zwischen der transparenten Abdeckung oder Linse (4) und der beweglichen optischen Einheit (10) jedes drehbaren Leuchtmoduls (5) angeordnet ist.

3. Leuchtvorrichtung (1) nach einem der vorangehenden Ansprüche, **dadurch gekennzeichnet, dass** der Schutzschild (21) ein selbsttragendes, vom Gehäusekörper (2) unabhängiges Element ist und wenigstens teilweise innerhalb des Gehäusekörpers so angeordnet ist, dass er wenigstens teilweise an und auf der Bodenwand (13) des Gehäusekörpers anliegt und stirnseitig starr mit dem Gehäusekörper (2) verbunden ist, und zwar mittels abnehmbarer Verbindungselemente (28), die durchgehend in jeweilige an den gegenüberliegenden longitudinalen Enden (30) des Schutzschilds vorgesehene erste Sitze (29) eingesetzt sind und in zweite Sitze (31) eingreifen, die stirnseitig im Gehäusekörper (2) vorgesehen sind und dessen Einlassöffnung zugewandt sind.

4. Leuchtvorrichtung (1) nach einem der vorangehenden Ansprüche, **dadurch gekennzeichnet, dass** das wenigstens eine drehbare Leuchtmodul (5) an der Halterung mit elektronischen Komponenten und/oder Kabeln (19) zur Steuerung und Speisung des drehbaren Leuchtmoduls versehen ist; wobei der von dem Schutzschild nach oben ragende erste Rand (23) den elektronischen Komponenten und/oder Kabeln (19) zugewandt ist und zwischen diesen und der transparenten Abdeckung oder Linse (4) angeordnet ist.

5. Leuchtvorrichtung (1) nach einem der vorangehenden Ansprüche, **dadurch gekennzeichnet, dass** sich der Schutzschild (21) wenigstens teilweise über einem Bodenabschnitt (35) des Umfangsrandes (32) der transparenten Abdeckung oder Linse (4) und axial entlang einer optischen Achse (O) des wenigstens einen drehbaren Leuchtmoduls (5) über einen vorderen Umfangsrand (34) des Gehäusekörpers (2), der mit dem kanalförmigen Sitz (33) versehen ist, der dazu ausgebildet ist, eine extrudierte Klebedichtung aufzunehmen, die den Gehäusekörper (2) und die transparente Abdeckung oder Linse (4) starr verbindet, hinaus erstreckt.

6. Fahrzeug, das mit einer Leuchtvorrichtung (1) nach einem der vorangehenden Ansprüche versehen ist.

## Revendications

1. Dispositif d'éclairage (1) pour véhicules, par exemple un feu avant ou un phare, comprenant un corps de boîtier (2) cupuliforme conçu pour être monté sur une carrosserie de véhicule et au moins un module d'éclairage (5) rotatif agencé dans le corps de boîtier faisant face à une ouverture d'entrée (3) avant de celui-ci fermée par un cache transparent ou un verre (4) ; chaque module d'éclairage (5) rotatif comprenant au moins une source de lumière (6) et une unité optique mobile (10) portée par un support (8) agencé dans le corps de boîtier (2), l'unité optique mobile (10) tournant par rapport à l'au moins une source de lumière (6) autour d'au moins un premier axe (A) et étant associée de manière fonctionnelle à l'au moins une source de lumière (6) ; le cache transparent ou le verre (4) ayant un bord périphérique (32) faisant face au corps de boîtier et se couplant dans un logement en forme de canal (33) prévu le long d'un bord périphérique avant (34) du corps de boîtier délimitant ladite ouverture d'entrée (3) de celui-ci, un fil d'étanchéité adhésif étant appliqué dans ledit logement en forme de canal (33) ; ledit dispositif étant **caractérisé en ce qu'**il comprend en outre une plaque de protection (21) agencée entièrement au niveau d'une paroi inférieure (13) du corps de boîtier (2) et entre le corps de boîtier (2) et le cache transparent ou le verre (4), la plaque de protection (21) étant conçue de façon à courir le long d'au moins une partie d'un profil inférieur (22) de l'ouverture d'entrée (3) faisant face à l'au moins un module d'éclairage (5) rotatif ;
ladite plaque de protection (21) ayant un premier bord (23) faisant saillie vers le haut devant le cache transparent ou le verre (4) et agencé entre le cache transparent ou le verre (4) et au moins une partie dudit support (8) et/ou d'une section inférieure (20) de l'unité optique mobile (10) ;
i)- la plaque de protection (21) s'étendant d'une façon en porte-à-faux à partir de l'ouverture d'entrée (3), faisant saillie en avant de celle-ci, au moins en partie au-delà d'un bord inférieur (24) de l'ouverture d'entrée (3), transversalement par rapport audit bord inférieur (24) de celle-ci et dans une concavité interne (25) du cache transparent ou du verre (4), qui est cupuliforme ;
ii)- la plaque de protection (21) ayant dans une coupe transversale, prise le long d'un axe optique (O) de l'au moins un module d'éclairage (5) rotatif, une forme sensiblement en L définie par une paroi inférieure (26) et par une paroi avant (27) de celle-ci, la paroi avant (27) définissant ledit premier bord (23) faisant saillie vers le haut de la plaque de protection (21), ledit premier bord (23) faisant saillie vers le haut étant configuré de telle sorte que
iii)- ladite plaque de protection (21) soit toujours interposée entre
iv)- ladite au moins une partie dudit support (8) et/ou d'une section inférieure (20) de l'unité optique mobile (10) dudit au moins un module d'éclairage (5) rotatif ; et
v)- à la fois une portion inférieure (35) du bord périphérique (32) du cache transparent ou du verre et ledit bord inférieur (24) de l'ouverture d'entrée (3) dudit corps, axialement au-delà des deux le long de l'axe optique (O) de chaque au moins un module d'éclairage (5) rotatif,
vi)- par exemple ladite plaque de protection (21) est agencée toujours interposée entre l'intérieur du corps de boîtier (2) et le fil d'étanchéité adhésif appliqué dans ledit logement en forme de canal (33), au moins au niveau d'une partie de celle-ci faisant face aux sections inférieures (20) de l'unité optique mobile (10) du au moins un module d'éclairage (5), évitant ainsi tout risque qu'une partie du fil d'étanchéité adhésif puisse atteindre l'au moins un module d'éclairage (5).

2. Dispositif d'éclairage (1) selon la revendication 1, **caractérisé en ce qu'**il comprend une pluralité de modules d'éclairage (5) rotatifs, la plaque de protection (21) faisant face à tous les modules d'éclairage rotatifs et étant interposée entre le cache transparent ou le verre (4) et l'unité optique mobile (10) de chaque module d'éclairage (5) rotatif.

3. Dispositif d'éclairage (1) selon l'une quelconque des revendications précédentes, **caractérisé en ce que** ladite plaque de protection (21) est un élément autoportant indépendant du corps de boîtier (2) et agencé au moins en partie dans le corps de boîtier de sorte à reposer au moins en partie contre et sur ladite paroi inférieure (13) du corps de boîtier et assemblée frontalement rigide avec le corps de boîtier (2) au moyen d'éléments de liaison amovibles (28) insérés de manière traversante à l'intérieur de premiers logements (29) respectifs prévus à des extrémités longitudinales (30) opposées de la plaque de protection et s'accouplant dans des deuxièmes logements (31) prévus frontalement dans le corps de boîtier (2), faisant face à l'ouverture d'entrée de celui-ci.

4. Dispositif d'éclairage (1) selon l'une quelconque des revendications précédentes, **caractérisé en ce que** ledit au moins un module d'éclairage (5) rotatif est pourvu au niveau dudit support de composants électroniques et/ou de câbles (19) pour commander et alimenter ledit module d'éclairage rotatif ; ledit premier bord (23) faisant saillie vers le haut de la plaque de protection fait face auxdits composants électroniques et/ou auxdits câbles (19) et est interposé entre eux et le cache transparent ou le verre (4).

5. Dispositif d'éclairage (1) selon l'une quelconque des revendications précédentes, **caractérisé en ce que** ladite plaque de protection (21) s'étend au moins en partie au-dessus d'une portion inférieure (35) du bord périphérique (32) du cache transparent ou du verre (4) et axialement le long d'un axe optique (O) du au moins un module d'éclairage (5) rotatif au-delà d'un bord périphérique avant (34) du corps de boîtier (2) pourvu dudit logement en forme de canal (33) conçu pour recevoir un joint d'étanchéité adhésif extrudé reliant rigides le corps de boîtier (2) et le cache transparent ou le verre (4).

6. Véhicule pourvu d'un dispositif d'éclairage (1) selon l'une quelconque des revendications précédentes.
